# EUROPÄISCHE PATENTSCHRIFT

(11) **EP 0 983 452 B1**
(45) Veröffentlichungstag und Bekanntmachung des Hinweises auf die Patenterteilung: **16.08.2001**
(21) Anmeldenummer: 98913657.7
(22) Anmeldetag: 06.03.1998
(51) Int. Cl.: F16D 65/12, F16D 69/04

(54) **REIBEINHEIT IN MASSIVBAUWEISE, INSBESONDERE BREMSSCHEIBE, MIT MEHREREN REIBKÖRPERN**
SOLID CONSTRUCTION FRICTION UNIT, SPECIALLY A BRAKE DISC WITH SEVERAL FRICTION BODIES
UNITE DE FRICTION COMPACTE, NOTAMMENT DISQUE DE FREIN, A PLUSIEURS CORPS DE FRICTION

(30) Priorität: 23.05.1997 DE 19721647
(43) Veröffentlichungstag der Anmeldung: 08.03.2000
(73) Patentinhaber: Deutsches Zentrum für Luft- und Raumfahrt e.V., 53175 Bonn (DE)
(72) Erfinder: KRENKEL, Walter, D-71272 Renningen (DE); HENKE, Thilo, D-70329 Stuttgart (DE); KOCHENDÖRFER, Richard, D-70619 Stuttgart (DE)
(74) Vertreter: Grimm, Ekkehard, Dipl.-Phys.
(86) Internationale Anmeldenummer: EP9801267
(87) Internationale Veröffentlichungsnummer: WO9853218

(56) Entgegenhaltungen:
- DE-A- 4 438 456
- GB-A- 2 099 365
- GB-A- 2 151 729
- US-A- 3 548 979
- US-A- 3 932 568
- US-A- 3 951 240
- US-A- 5 372 222
- PATENT ABSTRACTS OF JAPAN vol. 010, no. 360 (M-541), 3.Dezember 1986 & JP 61 157840 A (TOSHIBA CORP), 17.Juli 1986, in der Anmeldung erwähnt

## Beschreibung

Die vorliegende Erfindung betrifft eine Reibeinheit in Massivbauweise, insbesondere Bremsscheibe, mit mehreren Reibkörpern zum reibenden Eingriff mit einem Gegenkörper, die im Abstand zueinander in einem Halterungskörper angeordnet sind, der aus mindestens zwei übereinander angeordneten und miteinander verbundenen Halterungsteilkörpern besteht, wobei kanalartige Ausnehmungen vorgesehen sind, durch die sich die Reibkörper erstrecken, und wobei mindestens ein Endbereich der Reibkörper über eine Außenoberfläche des Halterungskörpers vorsteht und eine Stirnfläche aufweist, die eine Reibfläche bildet, und wobei jeder Reibkörper in seiner Längserstreckung senkrecht zur Reibfläche gesehen unterschiedliche Querschnittsbreiten aufweist.

Eine solche Reibeinheit in Form einer Bremsscheibe ist aus der JP-A-61-157840 bekannt. Diese Bremsscheibe besitzt zwei durch Punktschweißen miteinander verbundene, ringförmige Halterungsteilkörper aus Metallscheiben, insbesondere aus Grauguß, in die Stifte eingesetzt sind, die durch beide Scheiben hindurchführen. Die Stifte stehen über die jeweiligen Außenseiten der Halterungsteilkörper vor und bilden Reibflächen. Die Stifte sind aus gesintertem Siliziumnitrid hergestellt, das noch zusätzlich Yttriumoxid und Aluminiumoxid enthalten kann. Die Stifte sitzen lose in dem aus den Halterungsteilkörpern gebildeten Halterungskörper. Aufgrund der sehr unterschiedlichen Werkstoffe, die einerseits für die Stifte und andererseits für die Halterungsteilkörper verwendet werden, ist davon auszugehen, daß diese Bremsscheibe sehr großen Dimensionsschwankungen beim Erwärmen, insbesondere im Hochleistungsbremsbereich, unterliegt, so daß gerade unter Erwärmung wegen der erheblich unterschiedlichen Ausdehnung der benutzten Werkstoffe die eingesetzten Stifte ein erhebliches Spiel besitzen dürften. Weiterhin erscheint diese Bremsscheibe auch dahingehend problematisch zu sein, daß die beiden Halterungsteilkörper durch Punktschweißen nur lokal miteinander verbunden sind.

Aus der DE-A-44 38 456 ist eine Reibeinheit zum reibenden Eingriff mit einem Gegenkörper, insbesondere Brems- oder Kupplungskörper, mit mindestens einer frei zugänglichen Reibfläche, die aus einem kohlenstoffaserverstärkten, porösen Kohlenstoffkörper gebildet ist, dessen Poren zumindest teilweise mit Silizium und Siliziumkarbid gefüllt sind, bekannt, die dadurch gekennzeichnet ist, daß sie aus mindestens einem Kernkörper und mindestens einem mit diesem fest verbundenen Reibkörper gebildet ist, wobei der Reibkörper mit dem Kernkörper auf seiner der Reibfläche abgekehrten Seite verbunden ist und wobei beide Körper über eine hochtemperaturbeständige Verbindungsschicht miteinander verbunden sind.

Ausgehend von dem vorstehend beschriebenen Stand der Technik liegt der vorliegenden Erfindung die Aufgabe zugrunde, eine Reibeinheit, insbesondere eine Bremsscheibe, so auszubilden, daß sie die aufgezeigten Nachteile der bekannten Bremsscheibe nicht aufweist und darüberhinaus die Wärme im Vergleich zu der bekannten Bremsscheibe mit einer höheren Effektivität abführt, so daß eine solche Bremsscheibe auch im Hochleistungsbereich eingesetzt werden kann.

Die vorstehende Aufgabe wird, ausgehend von einer Bremsscheibe mit den eingangs genannten Merkmalen, dadurch gelöst, daß die Halterungsteilkörper aus einem mit Kohlenstoff- und/oder Keramik-Fasern verstärkten Verbundwerkstoff gebildet sind, wobei mindestens 50% der Fasern in ihrer Längserstreckung im wesentlichen parallel zur Reibfläche verlaufen, daß die Reibkörper aus Kohlenstoff und/oder Siliziumkarbid enthaltendem Werkstoff gebildet sind und daß die Halterungsteilkörper miteinander und mit den Reibkörpern mittels einer hochtemperaturfesten Schicht fest verbunden sind.

Mit diesen erfindungsgemäßen Maßnahmen, die unter anderem darin zu sehen sind, daß sowohl die Halterungsteilkörper als auch die Reibkörper aus einem artgleichen Material aufgebaut sind, ergeben sich Wärmeausdehnungskoeffizienten, die aneinander in sehr engen Bereichen angepaßt sind. Eine effiziente Wärmeabfuhr von den Reibflächen der einzelnen Reibkörper wird nur dadurch gewährleistet, daß die Reibkörper über die Halterungsteilkörper überstehen, so daß sie allseitig von Luft angeströmt werden, sondern darüberhinaus unterstützt die Faserorientierung in den Halterungsteilkörpern senkrecht zu der Längserstreckung dieser Körper bzw. parallel zu der Reibfläche der Reibkörper auch die Abfuhr der Wärme, die in den Halterungsteilkörpern von den Reibkörpern aufgenommen wird, radial nach außen. Hierdurch entsteht ein ständiger Wärmegradient von den Reibflächen der Reibkörper zu den Halterungsteilkörpern hin. Durch die Verwendung der artgleichen Materialien, indem zum einen die Reibkörper aus Kohlenstoff und/oder Siliziumkarbid enthaltendem Werkstoff gebildet sind, zum anderen die Halterungsteilkörper aus einem mit Kohlenstoff- und/oder Keramik-Fasern verstärkten Verbundwerkstoff gebildet sind, ist ein fester Verbund möglich, indem die Reibkörper und die mindestens zwei Halterungsteilkörper durch eine hochtemperaturfeste Schicht miteinander verbunden werden. Die gesamten Teile sind flächig miteinander verbunden, so daß sich ein homogener Aufbau ergibt mit einem für eine Reibeinheit günstigen Schwingungs- bzw. Dämpfungsverhalten. Weiterhin können die Reibkörper durch den verdickten Bereich formschlüssig und damit sicher gehalten werden.

Um die Materialien der Reibkörper an diejenigen der Halterungsteilkörper noch weiter anzupassen, können die Reibkörper mittels Kohlenstoff- und/oder Keramik-Fasern verstärkt werden. Gleichzeitig können solche Fasern mit einer Vorzugsrichtung senkrecht zu der Reibfläche orientiert werden, um eine Wärmeabfuhr der in dem Bereich der Reibfläche entstehenden Wärme zu den Halterungsteilkörpern hin zu unterstützen.

In einer bevorzugten Ausbildung wird die Reibeinheit aus drei verschiedenen Reibkörper-Arten aufgebaut: Reibkörper aus Siliziumkarbid, aus Kohlenstoff und aus faserverstärktem Siliziumkarbid. Grundsätzlich kann mit den Kohlenstoff-Reibkörpern der Reibwert belastungsunabhängig über einen weiten Temperaturbereich eingestellt werden. Über den Anteil der Siliziumkarbid-Reibkörper wird erreicht, daß die Verschleißbeständigkeit erhöht wird. Der Anteil der faserverstärkten Reibkörper führt zu einer hohen Festigkeit, insbesondere auch zum Zusammenhalten der mindestens zwei Halterungsteilkörper.

Die Reibkörper können auch im wesentlichen aus Graphit oder Siliziumkarbid gebildet werden, wobei diese Materialien gut sowohl mit Kohlenstoff- als auch mit Keramik-Fasern, falls die Reibkörper verstärkt werden, verträglich sind. Über den Gehalt an Siliziumkarbid kann die Verschleißbeständigkeit der Reibkörper eingestellt werden, die sich mit zunehmendem Siliziumkarbid-Gehalt erhöht, während der Kohlenstoff den Reibwert im wesentlichen temperaturunabhängig gestaltet. Unter diesem Aspekt sollten die Reibkörper in ihrer Materialzusammensetzung bezüglich Kohlenstoff und Siliziumkarbid eingestellt werden. Es besteht aber auch die Möglichkeit, eine bestimmte Anzahl an Reibkörpern nur aus Siliziumkarbid zu fertigen, während ein anderer Anteil der Reibkörper nur aus Kohlenstoff gebildet wird, um die materialspezifischen, vorstehend angeführten Vorteile in Bezug auf die jeweiligen Reibkörper zu erhalten.

Weiterhin können Reibkörper, die Siliziumkarbid enthalten, zusätzlich freies Silizium enthalten, wodurch der zusätzliche Effekt erzielt wird, daß sich im Reibeingriff der Reibkörper bei hohen Temperaturen das Silizium zu einer oxidationshemmenden SiO₂-Schicht bildet.

Die hochtemperaturfeste Schicht, mit der die einzelnen Teile der Reibeinheit, d.h. die Halterungskörper und die Reibkörper, miteinander verbunden werden, sollte mindestens 30 Vol.-% Siliziumkarbid enthalten. Die Verbindungsschicht kann über ein pastenförmiges Material hergestellt werden; es besteht auch die Möglichkeit, flüssiges Silizium in die Trennstelle zwischen den einzelnen Bauteilen zu infiltrieren, das sich dann, unter Wärmebehandlung, mit Kohlenstoff zu Siliziumkarbid umwandelt.

Wie bereits vorstehend ausgeführt ist, kann die Wärmeableitung von der Reibfläche der Reibkörper dadurch gefördert werden, daß bevorzugt ein Anteil der Fasern von der Reibfläche zu den Halterungsteilkörpern hin ausgerichtet ist. Es sollten hierbei, um einen bevorzugten Wärmegradienten in dieser Richtung zu erzielen, mindestens 50% der Fasern des Reibkörpers in ihrer Längsrichtung so ausgerichtet sein, daß sie mit den Flächennormalen der Reibflächen einen Winkel ≤ 45° einschließen. Der bevorzugte, eingeschlossene Winkel liegt allerdings bei < 30° und sollte möglichst kleiner 10° betragen, d.h. der größte Anteil der Fasern in den Reibkörpern wird im wesentlichen parallel zu der jeweiligen Flächennormalen ausgerichtet; im Idealfall würden diese Fasern senkrecht zur Reiboberfläche oder parallel zu den Flächennormalen der Reibfläche enden. Der Anteil solcher senkrecht zur Oberfläche bzw. in Richtung der Flächennormalen verlaufenden Fasern sollte hierbei mehr als 75% betragen, wobei vorzugsweise der Anteil bei über 90% liegt. In einem Idealkörper werden die Reibkörper durch Faserbündel gebildet, deren Fasern zueinander parallel ausgerichtet sind und in Richtung der Flächennormalen, zumindest im Oberflächenbereich der Reibfläche, verlaufend orientiert sind.

Die Matrix des Verbundwerkstoffs der Halterungsteilkörper, d.h. das das Fasergerüst zusammenhaitende Bindematerial, kann wesentliche Anteile an Keramik und/oder Kohlenstoff aufweisen, wobei über diese beiden Materialien wiederum die Festigkeit zum einen und zum anderen die Temperaturbeständigkeit eingestellt werden kann.

Um die Wärmeleitfähigkeit der Halterungsteilkörper weiter zu erhöhen und einzustellen, können in die Matrix des Verbundwerkstoffs Metallteile in Form von Metalleinlagen eingesetzt werden. Solche Metalleinlagen können beispielsweise dünne Metallspäne oder Metalldrähte oder -fasern sein. In Bezug auf die Kohlenstoff- und/oder Keramik-Fasern der Halterungsteilkörper verlaufen mindestens 50% der Fasern im wesentlichen parallel zur Reibfläche, der Gehalt an Fasern in den Halterungsteilkörpem sollte darüberhinaus mindestens 50 Vol.-% betragen, um die *ange*strebte Wärmeleitfähigkeit und Festigkeit in den Halterungsteilkörpern zu erzielen.

Um die Reibkörper in den Halterungskörpem zu verankern, werden die Reibkörper bevorzugt so ausgebildet, daß sie sich von der Trennfläche zwischen den mindestens zwei Halterungsteilkörpern aus gesehen zu ihrer Reibfläche hin verjüngen. Hierzu kann der sich verjüngende Reibkörperteil konisch ausgebildet werden; eine andere Möglichkeit besteht darin, daß im Bereich der Verjüngung eine Anschlagfläche oder ein Absatz gebildet ist. Der verdickte Bereich des Reibkörpers wird dann von der Trennfläche bzw. Trennebene der zwei Halterungsteilkörper aus in diese, und zwar in entsprechende, kanalartige Ausnehmungen oder Durchbrechungen, eingesetzt. Ein solcher Aufbau hat darüberhinaus den Vorteil, daß die Reibkörper in den sich konisch verjüngenden Öffnungen der Halterungsteilkörper unter hoher Wärmeeinwirkung klemmend gehalten werden. Durch die Schulter- und Anschlagflächen können definierte Lagen der Reibkörper in den Halterungskörpern, insbesondere in Bezug auf den über die Außenseite der Halterungsteilkörper vorstehenden Abschnitt, erreicht werden. Eine andere Variante, um zum einen die Halterungsteilkörper durch die Bohrungen oder kanalartigen Vertiefungen, in die die Reibkörper eingesetzt werden, nicht zu stark zu schwächen, gerade wenn die Halterungsteilkörper mit einer sehr hohen Anzahl von Reibkörpern versehen ist, und um zum anderen aber eine große Reibfläche an den Stirnflächen der Reibkörper zu erzielen, können die Reibkörper im Querschnitt T-förmig ausgebildet werden, wobei sich der erweiterte Bereich der Reibkörper an die Außenseite der Halterungsteilkörper anlegt. In dieser Anordnung können in im Querschnitt gering bemessenen Aufnahmebohrungen Reibkörper eingesetzt werden, die eine große Reibfläche besitzen.

Um noch weiterhin die Belegungsdichte der Halterungsteilkörper mit Reibkörpern zu erhöhen, können Ausnehmungen vorgesehen werden, die in radialer Richtung der scheibenartigen Halterungsteilkörper gesehen einseitig offen ausgebildet sind, d.h. diese kanalartigen Ausnehmungen sind in den radial innen- bzw. außenliegenden Stirnflächen der Halterungsteilkörper eingebracht. In diese Ausnehmungen werden dann von der Innen- bzw. Außenseite aus die Reibkörper eingesetzt. In solchem Fall sind insbesondere Reibkörper, die einen H-förmigen Querschnitt besitzen, von Vorteil, da diese Reibkörper dann gleichzeitig dazu dienen können, die mindestens zwei Halterungsteilkörper fest miteinander zu verbinden bzw. zu verklemmen.

Gerade dann, wenn Reibkörper mit einem axial in der Mitte liegenden, sich verdikkenden Bereich verwendet werden, ist es von Vorteil, mindestens drei Halterungsteilkörper vorzusehen, wobei der mittlere Halterungsteilkörper mit Bohrungen oder Ausnehmungen versehen ist, die dem verdickten Bereich der Reibkörper entsprechen. Solche Bohrungen können durch den mittleren Halterungsteilkörper mit gleichem Querschnitt hindurchgebohrt werden, so daß sich ein fertigungstechnisch einfacher Aufbau ergibt.

Falls die Reibkörper einen ausreichenden Querschnitt aufweisen, können sie mit einem Hohlraum versehen und rohr- oder hülsenförmig ausgebildet werden mit einer Öffnung im wesentlichen senkrecht zu der Reibfläche. Über eine solche Öffnung kann darüberhinaus Abrieb aufgenommen und von der Reibfläche abgeführt werden.

Unter dem Begriff Reibeinheit, wie er hier verwendet wird, sind nicht nur Bremsscheiben und Bremsklötze zu verstehen, sondern auch Reibbeläge, die für Kupplungen, oder dergleichen, eingesetzt werden.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine perspektivische Darstellung einer Reibeinheit in Form einer Bremsscheibe, wobei vier Reibkörper vorgesehen sind,
- Figur 2: einen Schnitt durch eine Reibeinheit entsprechend der Figur 1, wobei in dieser Schnittdarstellung verschiedenartig geformte Reibkörper dargestellt sind, die mit den Buchstaben A bis F jeweils bezeichnet sind,
- Figur 3A: eine perspektivische Ansicht eines Reibkörpers, wie er in Verbindung mit der Reibeinheit der Figur 1 eingesetzt ist, mit zwei gegenüberliegenden Reibflächen,
- Figur 3B: eine Ansicht eines Reibkörpers entsprechend der Figur 3A, allerdings mit nur einer Reibfläche,
- Figur 4: eine schematische Ansicht eines Reibkörpers, der prinzipiell dem Reibkörper der Figur 3B entspricht, allerdings mit rechteckiger Querschnittsform im Gegensatz zu der runden Querschnittsform der Ausführungsform der Figur 3B,
- Figur 5: einen Reibkörper mit zwei Reibflächen, wobei die Reibflächen einen langgestreckten, rechteckigen Querschnitt aufweisen,
- Figur 6: eine Schnittdarstellung durch eine Reibeinheit mit drei Halterungsteilkörpern, wobei drei verschiedenartige geformte Reibkörper eingesetzt sind, die mit G, H und I jeweils bezeichnet sind,
- Figur 7: eine Reibeinheit in Form eines schmalen Rings, bei der von der radialen Außenstirnfläche und Innenstirnfläche jeweils H-förmige Reibkörper eingesetzt sind,
- Figur 8: eine vergrößerte Darstellung eines Reibkörpers, wie er in Figur 7 zu sehen ist,
- Figuren 9A bis 12A: sowie die Figuren 9B bis 12B jeweils in einer stirnseitigen Draufsicht sowie in einem Schnitt entsprechend der angegebenen Schnittlinien Reibkörper mit schematisch dargestelltem Faserverlauf, um die verschiedene Variationsmöglichkeiten im Rahmen der Erfindung zu erläutern, und
- Figur 13: eine Draufsicht einer erfindungsgemäßen, maßstäblichen Bremsscheibe mit unterschiedlichen Geometrien und Arten von Reibkörper-Materialien.

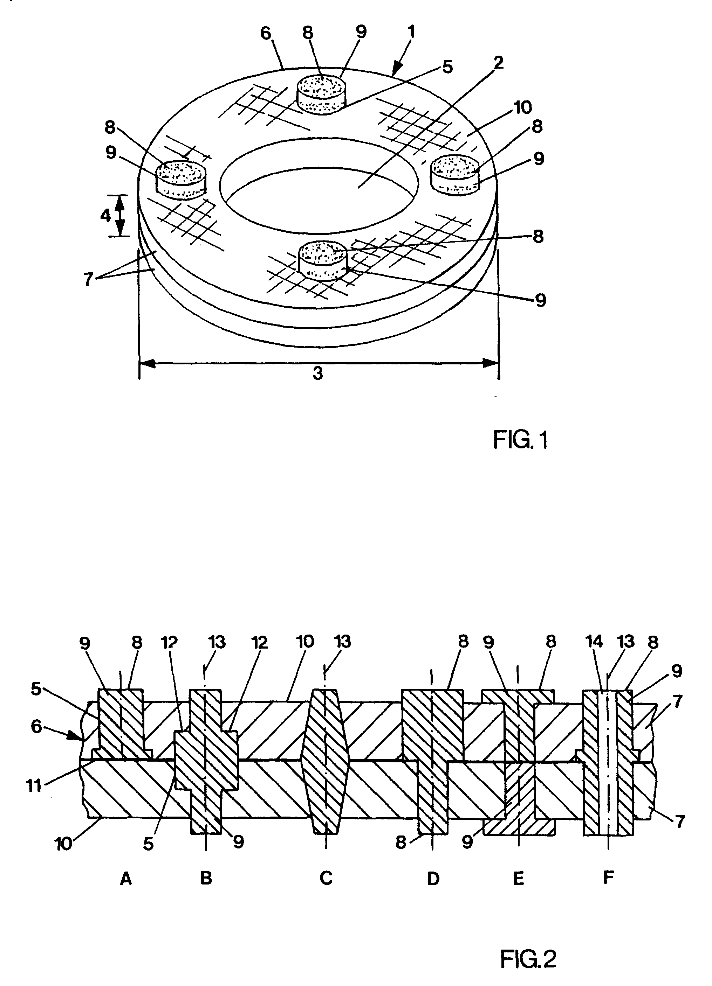

In Figur 1 ist schematisch eine Reibeinheit in Form einer Bremsscheibe 1 dargestellt, die ringförmig mit einer zentralen Öffnung 2 aufgebaut ist. Typischerweise weist eine solche Bremsscheibe einen Außendurchmesser 3 von ca. 300 bis 350 mm auf, während die Dicke 4 zwischen 8 und 15 mm beträgt.

Die Bremsscheibe 1 umfaßt einen Halterungskörper 6, der aus zwei scheibenförmigen Halterungsteilkörpern 7 zusammengesetzt ist. Die Halterungsteilkörper 7 sind aus einem mit Kohlenstoff- und/oder Keramik-Faser verstärkten Verbundwerkstoff gebildet. Die Fasern dieses Verbundwerkstoffs, wobei es sich überwiegend um kontinuierliche Fasern handelt, verlaufen in ihrer Längserstreckung im wesentlichen parallel zu der Oberfläche der Halterungsteilkörper 7 bzw. zu der Reibfläche 8 von bolzenartigen Reibkörpern 9, die in Bohrungen 5 eingesetzt von der Oberfläche 10 des Halterungsteilkörpers 7 vorstehen. Je nach Art der Bremsscheibe bzw. der Reibeinheit, die aufgebaut werden soll, sind die Reibkörper 9 nur auf der einen Seite des Halterungskörpers 6 einseitig oder beidseitig vorstehend, wie dies noch anhand der Figur 2 erläutert wird. Die Reibkörper 9 sind aus einem Kohlenstoff- und/oder Siliziumkarbid enthaltenden Werkstoff gebildet und können zusätzlich geringe Mengen an freiem Silizium enthalten. Die Reibkörper sind mittels Kohlenstoff- und/oder Keramik-Fasern verstärkt, die dann weitgehendst, d.h. bevorzugt in einer Menge von mehr als 90% der vorhandenen Fasern, senkrecht zu der Reibfläche 8 bzw. parallel zu der auf der Reibfläche 8 stehenden Flächennormalen ausgerichtet sind. Durch diese bevorzugte Ausrichtung wird unmittelbar die auf den Reibflächen 8 der Reibkörper 9 entstehende Wärme beim reibenden Eingriff mit einem Gegenkörper zu dem Halterungskörper 6 abgeführt, indem die bevorzugte Richtung der Wärmeleitung radial nach außen durch die sich in der Ebene der Halterungsteilkörper 7 erstreckenden Fasern liegt.

Wie anhand der Figur 1 ersichtlich ist, wird die Reibfläche, mit der diese Bremsscheibe 1 mit einem Gegenstück, beispielsweise einem Bremsklotz, in Eingriff gelangt, nur durch die Reibflächen 8 der Reibkörper 9 gebildet. Insofern stehen diese Reibkörper 9 über die Oberfläche 10 des Halterungsteilkörpers 7 vor.

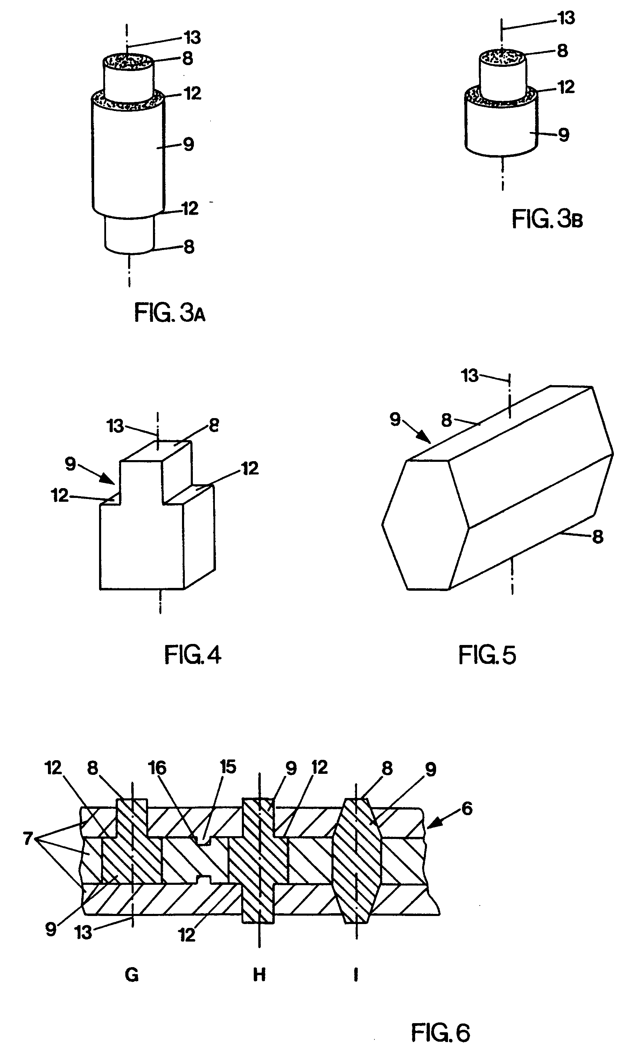

In Figur 2 sind verschiedene, bevorzugte Ausführungsformen von Reibkörpern 9 dargestellt, die mit A bis F bezeichnet sind. Bei dem Reibkörper 9 der Ausführungsform A handelt es sich um einen kurzen Bolzen, der im Querschnitt zylindrisch oder rechteckig geformt sein kann. Dieser Reibkörper 9 erstreckt sich nur durch die Bohrung 5 bis zu der Verbindungsfläche 11 zwischen dem oberen Halterungsteilkörper 7 und dem unteren Halterungsteilkörper 7. Um die Reibkörper 9 in dem Halterungskörper 6 fest zu verankern, ist eine Form der Reibkörper zu bevorzugen, wie sie in Figur 2 mit B und C sowie den Figuren 3 bis 5 zu sehen sind.

Der Reibkörper B der Figur 2 sowie die Reibkörper der Figuren 3A, 3B und 4, weisen einen Teilbereich auf, der eine größere Querschnittsfläche als der außenliegende, die Reibfläche 8 aufweisende Teilbereich besitzt. Im Bereich der Verjüngung ist jeweils eine Schulterfläche 12 gebildet, die sich in eine entsprechend erweiterte Bohrung des jeweiligen Halterungsteilkörpers 7 einsetzt. Wie anhand des Reibkörpers B der Figur 2 zu sehen ist, wird dadurch ein axiales Verschieben der Reibkörper unterbunden. Aufgrund der Zweiteiligkeit des Halterungskörpers 6 ist es in einfacher Weise möglich, die Ausnehmung zur Aufnahme der Reibkörper 9 mit seinem verdickten Bereich zu fertigen. Je nach Anforderung können die Reibkörper einen kreisförmigen Querschnitt aufweisen, wie dies die Figuren 3A und 3B zeigen, oder aber einen rechteckigen Querschnitt, wie dies die Figur 4 zeigt. Darüberhinaus können die Reibflächen 8 entsprechend lang ausgebildet werden, wie dies die Ausführungsform des Reibkörpers 9 der Figur 5 zeigt. Es ist aber auch möglich, unterschiedliche Querschnittsformen miteinander zu kombinieren, beispielsweise in der Form, daß der verdickte Teil des Reibkörpers 9 im Querschnitt quadratisch oder rechteckig ausgebildet ist, wie dies die Figur 4 zeigt, während der sich verjüngende Fortsatz, der über die Schulterflächen 12 vorsteht, einen kreisrunden Querschnitt aufweist, wie dies die Ausführungsformen der Figuren 3A und 3B zeigen. Eine weitere bevorzugte Form eines Reibkörpers, der sich von seinem mittleren Abschnitt zu der Reibfläche 8 hin verjüngt, ist in der Ausführungsform C der Figur 2 dargestellt, wobei der Reibkörper 9 beidseitig der Verbindungsfläche 11 einen sich verjüngenden Konus aufweist. Diese grundsätzliche Querschnittsform entspricht auch der Figur 5, in Richtung der Längsachse, die mit dem Bezugszeichen 13 bezeichnet ist, gesehen.

Eine weitere Reibkörperform ist mit D in Figur 2 bezeichnet. Hierbei ist der sich durch den einen Halterungsteilkörper 7 erstreckende Teil des Reibkörpers 9 im Durchmesser größer ausgebildet als der sich in den anderen Halterungsteilkörper 7 erstreckende Abschnitt, wobei die Querschnittsverengung im Bereich der Verbindungsfläche 11 gebildet ist, so daß die jeweiligen Bohrungen, um den Reibkörper 9 mit seinem unterschiedlichen Durchmesser aufzunehmen, in einfacher Weise in den jeweiligen Halterungsteilkörper gebildet werden können.

Es wird verständlich, daß die über die Oberseite 10 der Halterungsteilkörper 7 vorstehenden Abschnitte der Reibkörper 9 den Vorteil haben, daß sie allseitig von Kühlluft umströmt werden. Darüberhinaus ist anzustreben, eine möglichst große Gesamtreibfläche, die sich aus den einzelnen Reibflächen 8 der Reibkörper 9 zusammensetzt, zu erzielen. Je dichter die Halterungsteilkörper 7 mit Reibkörpern 9 belegt werden, desto mehr wird durch die erforderlichen Bohrungen die Struktur der Halterungsteilkörper zerstört. Um eine möglichst große Reibfläche 8 zu erzielen, allerdings die Halterungsteilkörper 7 mit möglichst geringen Bohrungsquerschnittsflächen zu durchsetzen, ist eine Ausführung eines Reibkörpers 9 von Vorteil, wie er in Figur 2 mit E bezeichnet ist. Der Reibkörper weist einen etwa T-förmigen Querschnitt auf mit einer erweiterten Kopfplatte und einem sich verjüngenden Schaftbereich. Ein solcher T-förmiger Reibkörper 9 muß, falls eine beidseitig reibende Reibeinheit aufgebaut werden soll, von beiden Seiten der beiden Halterungsteilkörper 7 aus eingesetzt werden, wie dies in Figur 2 zu sehen ist.

Weiterhin ist mit der Ausführungsform F der Figur 2 ein Reibkörper 9 dargestellt, der eine Mittelbohrung 14 besitzt, die sich entlang der Längsachse 13 erstreckt. Mit dieser Mittelbohrung 14 wird die Oberfläche des Reibkörpers 9, die Wärme abgeben kann, erhöht, darüberhinaus kann eine solche Mittelbohrung 14 Abriebmaterial von der Reibfläche 8 aufnehmen.

Wie anhand der Figur 2 zu erkennen ist, kann es eine gewisse Schwierigkeit bereiten, Bohrungen 5 in die Halterungsteilkörper 7 einzubringen, die einen abgestuften Querschnitt besitzen, um zum Beispiel einen Reibkörper 9 entsprechend der Ausführungsform B aufzunehmen. Um dies zu erleichtern, kann ein Aufbau des Halterungskörpers 6 von Vorteil sein, der aus drei Halterungsteilkörpern 7 aufgebaut ist, wie dies in Figur 6 angedeutet ist. Durch diesen dreiteiligen Aufbau ist es möglich, in dem mittleren Halterungsteilkörper 7 Bohrungen einzubringen, die dem verdickten Querschnittsbereich der jeweiligen Reibkörper 9 entsprechen, d.h. Bohrungen mit einem gleichbleibenden Querschnitt über die Dicke des mittleren Halterungsteilkörpers 7, während in den beiden äußeren Halterungsteilkörpern 7 Bohrungen mit einem geringeren Durchmesser eingebracht werden, um den sich verjüngenden Abschnitt der Reibkörper 9 aufzunehmen, wie dies in Figur 6 anhand der Ausführungsformen G und H der Reibkörper 9 zu sehen ist. Gleiches gilt für den Reibkörper 9 der Ausführung I der Figur 6, der einen zylindrischen, mittleren Abschnitt besitzt, der dem mittleren Halterungsteilkörper 7 zugeordnet ist, während sich an diesen mittleren Abschnitt konisch verjüngende äußere Abschnitte, die jeweils die Reibfläche 8 tragen, anschließen, die den äußeren Halterungsteilkörpern 7 zugeordnet sind.

Um die einzelnen Halterungsteilkörper 7 im Bereich der Verbindungsfläche 11 kraft-und/oder formschlüssig zu verbinden, können Zapfen und Nuten 15, 16 vorgesehen werden, wie dies in Figur 6 dargestellt ist; solche Zapfen und Nuten können aber auch bei einem zweiteiligen Aufbau des Halterungskörpers 6 entsprechend der Figuren 1 und 2 vorgesehen werden.

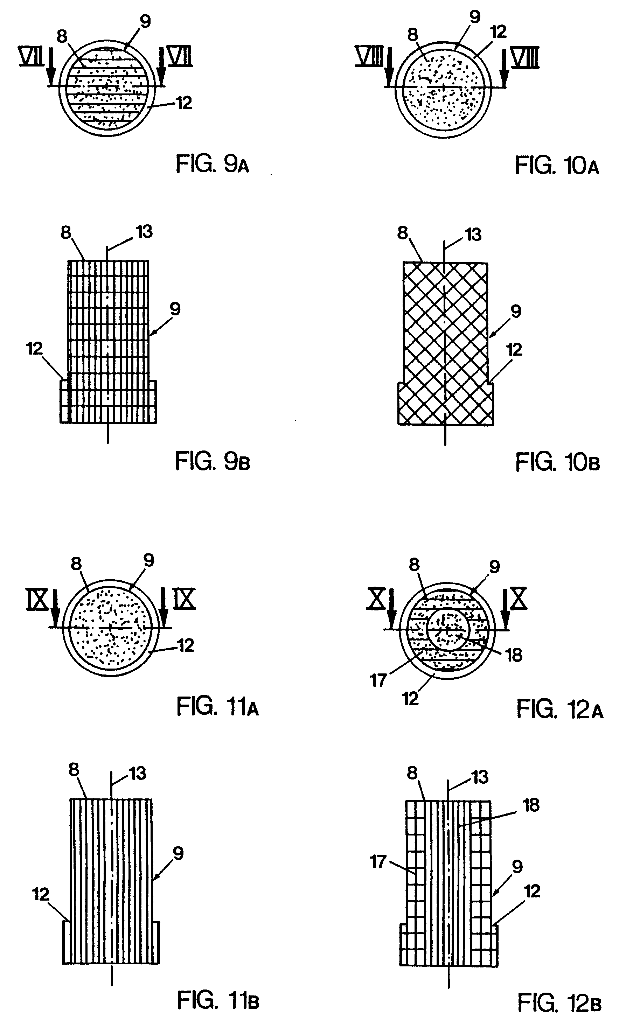

In den Figuren 9 bis 12 sind verschiedene schematische Anordnungen von Reibkörpern in Boizenform, d.h. mit etwa kreisförmigem Querschnitt, dargestellt, beispielsweise entsprechend der Ausführungsform A des Reibkörpers 9 der Figur 2.

In den Figuren 9A und 9B ist ein Reibkörper 9 dargestellt, der aus einem zweidimensionalen Gewebe, das in einzelne Lagen, wie die Figur 9A zeigt, über den Querschnitt geschichtet, aufgebaut ist. Die Fasern laufen unter 0 Grad und 90 Grad zu der Längsachse, in den Figuren mit der strichpunktierten Linie 13 gekennzeichnet. Das Wesen dieses Reibkörpers 9 ist darin zu sehen, daß eine Vorzugsrichtung der Kohlenstoff-Fasern in Richtung der Längsachse 13 verläuft, während ein etwa gleich großer Teil quer dazu ausgerichtet ist. Dadurch erfolgt gleichwertig ein Wärmetransport sowohl in Richtung der Längsachse 13 als auch von der Reibfläche 8 weg.

In den Figuren 10A und 10B ist ein Reibkörper 9 gezeigt, der aus einem zweidimensionalen Fasergewebe aufgebaut ist, das beispielsweise mit der Längsachse 13 als Zentrum gewickelt wurde. Wie die Figur 10A schematisch darstellt, enden die Fasern mit ihren Enden in der Reibfläche 8, so daß die an der Reibfläche 8 erzeugte Wärme durch die definierte Ausrichtung der Fasern unter einem Winkel von 45 Grad zu der Längsachse 13, zu der gegenüberliegenden Seite abgeführt wird. Der Vorteil dieser Anordnung ist darin zu sehen, daß alle Fasern gleichzeitig in Richtung der Längsachse 13 wie auch quer dazu die Wärme ableiten.

Die Figuren 11A und 11 B zeigen einen Aufbau, bei dem im wesentlichen nur zu der Längsachse 13 parallele Fasern vorgesehen sind. Hierbei handelt es sich quasi um ein Faserbündel, in dem die gesamten Fasern parallel orientiert sind, so daß sie senkrecht zu der Reibfläche 8 verlaufen.

Die Figuren 12A und 12B zeigen eine Variante eines Reibkörpers 9 mit einem äußeren Mantelbereich, mit dem Bezugszeichen 17 bezeichnet, und einem Kernbereich 18. In dem Kernbereich 18 sind die Fasern entsprechend der Figuren 11A und 11 B parallel zu der Längsachse 13 ausgerichtet, während der Mantelbereich 17 entsprechend der Ausführungsform der Figuren 9A und 9B aus einem zweidimensionalen Gewebe aufgebaut ist. Mit diesem Aufbau des Reibkörpers 9 wird ein abgestufter Wärmegradient zu der Längsachse 13 und von der Reibfläche 8 weg zu der gegenüberliegenden Seite erzeugt, so daß die Wärme definiert von der Reibfläche 8 und quer zur Längsachse 13 abgeführt wird.

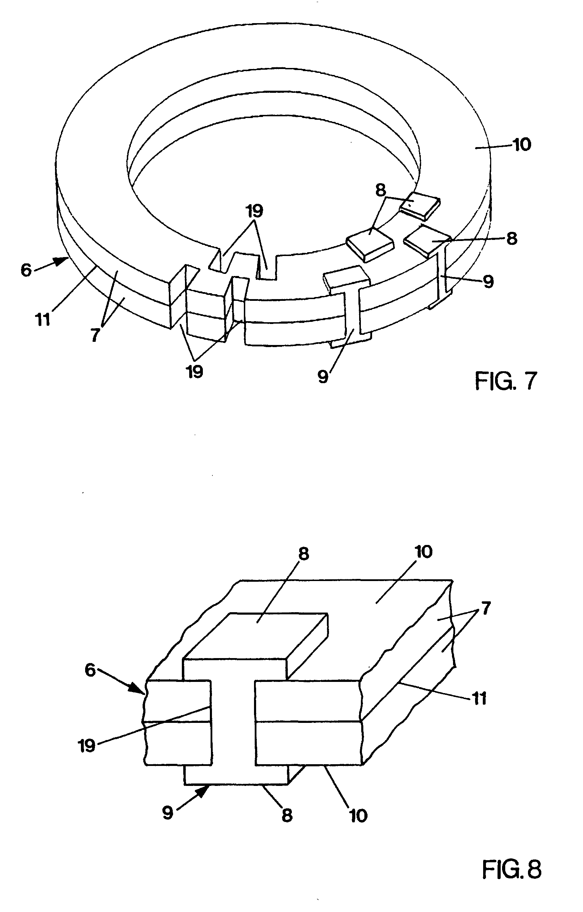

In den Figuren 7 und 8 ist schematisch ein weiterer Aufbau einer ringförmigen Reibeinheit mit zwei Halterungsteilkörpern 7 dargestellt. In dieser Ausführungsform ist die Möglichkeit aufgezeigt, Reibkörper 9 in radial innenliegenden oder radial außenliegenden Ausnehmungen 19 einzusetzen. Hierzu können im Querschnitt H-förmige Reibkörper 9 verwendet werden, falls diese Reibeinheit für einen doppelseitigen reibenden Eingriff vorgesehen ist, so daß die Reibkörper 9 jeweils vergrößerte Kopfbereiche aufweisen, die auf der Oberfläche 10 der Halterungsteilkörper aufliegen und die Reibfläche 8 jeweils tragen. Diese H-förmigen Reibkörper 9, vorzugsweise mit einem rechtwinkligen Querschnitt senkrecht zu deren Längsachse, können als zusätzliche Verbindung der Halterungsteilkörper 7 dienen; darüberhinaus ist mit solchen Reibkörpern 9 eine Belegung des Halterungskörpers 6 bis zu dem radial äußeren und inneren Rand hin möglich, so daß eine große Gesamtreibfläche, die sich aus den einzelnen Reibflächen 8 zusammensetzt, erhalten werden kann.

Eine bevorzugte Ausführung eines Aufbaus einer solchen Reibeinheit in faserverstärkter Bauweise ist dann gegeben, wenn sowohl die Halterungsteilkörper 7 als auch die Reibkörper 9 aus einem Gerüst aus Kohlenstoff-Fasern aufgebaut sind, unter definierter Orientierung der Fasern in dem Reibkörper 9 so, wie dies vorstehend angegeben ist; hierzu werden die Reibkörper und die Halterungsteilkörper als poröser Kohlenstoff-Fasergerüst-Rohling hergestellt, und dann mit flüssigem Silizium infiltriert, das sich dann, unter Wärmebehandlung, mit Kohlenstoff zu Siliziumkarbid umwandelt. Nach der Keramisierung wird eine hochfeste Bremseinheit erzielt, die zum einen den Anforderungen als Hochleistungs-Bremseinheit gerecht wird, bei der auf der Reibfläche 8 sehr hohe Temperaturen erzeugt werden, die aber andererseits einen extrem hohen Grad einer Wärmeabfuhr liefert. Für den Aufbau der Reibkörper und der Halterungsteilkörper werden vorzugsweise hoch wärmeleitende Fasern, wie sogenannte Hoch-Modul-Fasern, eingesetzt, die durch eine Wärmeleitfähigkeit größer 20 W/mK gekennzeichnet sind.

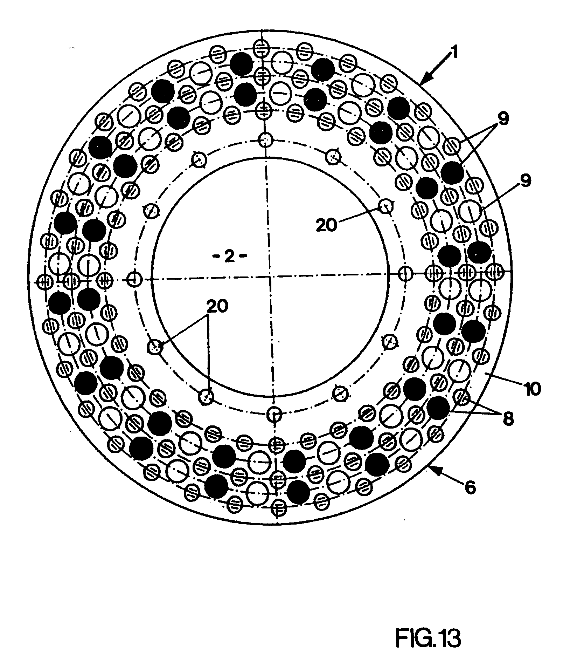

Während die Figuren 1 bis 12 schematische Darstellungen von Bremsscheiben und Reibkörpern zeigen, ist in Figur 13 eine in etwa maßstabsgetreue und bevorzugte Bremsscheibe 1 mit einem Außendurchmesser von 330 mm dargestellt. Diese Bremsscheibe 1 besitzt eine zentrale Aufnahmeöffnung mit einem Durchmesser von 162 mm, die, entsprechend der Darstellung der Figur 1, mit dem Bezugszeichen 2 bezeichnet ist. Weiterhin sind nahe dem Rand der zentralen Öffnung 2 gleichmäßig verteilt Befestigungsbohrungen 20 zu sehen, mittels derer die Bremsscheibe an einer angetriebenen Einheit befestigt werden kann. Der Halterungskörper 6 besitzt in einem gleichmäßigen Muster verteilt fünf Reihen mit Reibkörpem 9, entsprechend der Figur 1 mit dem Bezugszeichen 9 bezeichnet, wobei die Reibkörper 9 der einzelnen Reihen jeweils in radialer Richtung versetzt zueinander angeordnet sind, so daß zwischen benachbarten Reibkörpern 9 jeweils ein schmaler Freiraum verbleibt. Diese Reibkörper 9 können beispielsweise eine Querschnittform aufweisen, wie dies in Figur 3A dargestellt ist. Als Besonderheit der Bremsscheibe 1, die in Figur 13 dargestellt ist, ist hervorzuheben, daß über den Umfang verteilt aus verschiedenartigen Werkstoffen aufgebaute Reibkörper 9 eingesetzt sind, die darüberhinaus einen unterschiedlichen Durchmesser aufweisen. Insgesamt sind drei Arten von Reibkörpern 9 eingesetzt wie folgt: Graphit-Reibkörper 9 (in Figur 13 schwarz dargestellt) mit einem Durchmesser von 15 mm und 32 Stück, die einen Gesamtreibflächenanteil von 25% haben. Die zweite Art sind silizium-infiltrierte Siliziumkarbid-Reibkörper 9 (in Figur 13 weiß dargestellt) mit einem Durchmesser von 15 mm und 32 Stück, die einen Anteil an der Gesamtreibfläche von 25% haben. Die dritte Art sind mit Kohlenstoff-Fasern verstärkte Siliziumkarbidboizen mit einem Durchmesser von 11 mm und einer Anzahl von 96 Stück, deren Reibflächenanteil 50% der Gesamtreibfläche dieser Bremsscheibe 1 bildet.

Die Graphit-Reibkörper 9 besitzen einen Anteil von 100% Graphit und haben den Zweck, den Reibwert temperaturstabil zu halten. Die silizium-infiltrierten Siliziumkarbid-Reibkörper 9 sind überwiegend aus Siliziumkarbid aufgebaut und sollen die Verschleißfestigkeit erhöhen, während die faserverstärkten Siliziumkarbid-Reibkörper 9 aus Kohlenstoff-Fasern und einer Siliziumkarbid-Matrix aufgebaut sind, die den Zweck haben, eine hohe Festigkeit und Thermoschockbeständigkeit der Reibeinheit zu gewährleisten. Wie anhand der Figur 13 zu erkennen ist, kann mit der geeigneten Wahl der jeweiligen Art der Reibkörper 9, die in der Bremsscheibe 1 verwendet werden, und der eingesetzten Anzahl sowie deren Verteilung das Reibverhalten insbesondere in Bezug auf die Verschleißfestigkeit, die Wärmeabfuhr und das Temperaturverhalten bei unterschiedlichen Temperaturen eingestellt werden.

Die verschiedenen Reibkörper 9, wie sie in der vorstehenden Beschreibung erläutert sind, sollen u. a. die Funktion erfüllen, eine in Richtung der Flächennormalen der Reibfläche 8 hohe Wärmeleitung zu erzielen, um definiert die Wärme von der Reibfläche 8 wegzuführen. Um einen solchen Effekt zu erzielen, bieten sich verschiedene Aufbauten für die Reibkörper an, wie zum Beispiel Reibkörper aus mit Kohlenstoff-Fasern verstärktem Verbundwerkstoff, der Einbau von Metalleinlagen in die Reibkörper, sowie Reibkörper, deren Kohlenstoff-Fasern in Siliziumkarbid, das durch Fiüssiginfiltration von Silizium und Reaktion mit Kohlenstoff gebildet wird, eingebettet sind. Ein solcher mit Kohlenstoff-Fasern verstärkter Verbundwerkstoff wird zunächst mit der angestrebten Faserorientierung als Grünkörper gebildet, wobei die Kohlenstoff-Fasern mit ausgehärteten Polymeren durchsetzt sind. Anschließend wird dieser Körper pyrolisiert, so daß sich eine Mikrorißstruktur bildet, die anschließend mit flüssigem Silizium infiltriert wird, und zwar unter Wärmeeinwirkung mit Temperaturen im Bereich von 1410°C bis 1700°C in einer eingestellten Atmosphäre, so daß sich das infiltrierte Silizium mit Kohlenstoff, und zwar unter der Wärmeeinwirkung, zu Siliziumkarbid umwandelt. Mit dieser Verfahrenstechnik ist es möglich, zunächst einen porösen Kohlenstoffkörper als Rohling zu fertigen, der eine definierte Form aufweist, um ihn erst dann nach der Infiltration von Silizium und der Wärmebehandlung zu einem Verbundkörper zu verfestigen bzw. zu keramisieren.

Eine weitere Möglichkeit ist eine massive Ausbildung der Reibkörper aus Kohlenstoff, vorzugsweise aus Graphit, oder aus monolithischem, unverstärktem Material, vorzugsweise Siliziumkarbid bzw. gesintertem Siliziumkarbid oder aus mit Silizium infiltriertem Siliziumkarbid. Von den vorstehenden Materialien sollten monolithische Keramiken dann in einem gewissen Umfang für solche Reibkörper eingesetzt werden, wenn zusätzlich eine Verschleißminderung angestrebt wird, während Reibkörper, die wesentliche Anteile an Kohlenstoff, insbesondere an Graphit, enthalten, zur Geräuschdämpfung und für die Reibwertkonstanz dienen; darüberhinaus sind Reibkörper aus Graphit auch kostengünstig aufbaubar, und schließlich ist deren Wärmeleitfähigkeit sehr gut einstellbar, so daß der angestrebte Wärmegradient im Bereich der Reibkörper erreicht wird.

## Patentansprüche

1. Reibeinheit in Massivbauweise, insbesondere Bremsscheibe, mit mehreren Reibkörpem (9) zum reibenden Eingriff mit einem Gegenkörper, die im Abstand zueinander in einem Halterungskörper (6) angeordnet sind, der aus mindestens zwei übereinander angeordneten und miteinander verbundenen Halterungsteilkörpern (7) besteht, wobei kanalartige Ausnehmungen (5; 19) vorgesehen sind, durch die sich die Reibkörper (9) erstrecken, und wobei mindestens ein Endbereich der Reibkörper (9) über eine Außenoberfläche (10) des Halterungskörpers (6) vorsteht und eine Stirnfläche aufweist, die eine Reibfläche (8) bildet, und wobei jeder Reibkörper (9) in seiner Längserstreckung senkrecht zur Reibfläche (8) gesehen unterschiedliche Querschnittsbreiten aufweist, dadurch gekennzeichnet, daß die Halterungsteilkörper (7) aus einem mit Kohlenstoff- und/oder Keramik-Fasern verstärkten Verbundwerkstoff gebildet sind, wobei mindestens 50% der Fasern in ihrer Längserstreckung im wesentlichen parallel zur Reibfläche (8) verlaufen, daß die Reibkörper (9) aus Kohlenstoff und/oder Siliziumkarbid enthaltendem Werkstoff gebildet sind und daß die Halterungsteilkörper (7) miteinander und mit den Reibkörpern (9) mittels einer hochtemperaturfesten Schicht fest verbunden sind.

2. Reibeinheit nach Anspruch 1, dadurch gekennzeichnet, daß die Reibkörper (9) mittels Kohlenstoff- und/oder Keramik-Fasern verstärkt sind.

3. Reibeinheit nach Anspruch 1, dadurch gekennzeichnet, daß die Reibkörper (9) aus einem Werkstoff gebildet sind, der neben Siliziumkarbid noch Kohlenstoff und freies Silizium enthält.

4. Reibeinheit nach Anspruch 1, dadurch gekennzeichnet, daß ein Teil der Reibkörper (9) im wesentlichen aus Kohlenstoff und ein Teil der Reibkörper im wesentlichen aus Siliziumkarbid gebildet sind.

5. Reibeinheit nach Anspruch 1, dadurch gekennzeichnet, daß die Siliziumkarbid enthaltenden Reibkörper (9) freies Silizium enthalten.

6. Reibeinheit nach Anspruch 1, dadurch gekennzeichnet, daß die hochtemperaturfeste Schicht mindestens 30 Vol.-% Siliziumkarbid enthält.

7. Reibeinheit nach Anspruch 2, dadurch gekennzeichnet, daß mindestens 50% der Fasern der Reibkörper (9) in ihrer Längsrichtung so ausgerichtet sind, daß sie mit den Flächennormalen der Reibflächen (8) einen Winkel ≤ 45° einschließen.

8. Reibeinheit nach Anspruch 7, dadurch gekennzeichnet, daß der eingeschlossene Winkel < 30° beträgt.

9. Reibeinheit nach Anspruch 8, dadurch gekennzeichnet, daß der eingeschlossene Winkel < 10° beträgt.

10. Reibeinheit nach Anspruch 9, dadurch gekennzeichnet, daß die Fasern der Reibkörper (9) nahezu parallel zur Flächennormalen der Reibfläche (8) verlaufen.

11. Reibeinheit nach einem der Ansprüche 7 bis 10, dadurch gekennzeichnet, daß der Anteil der ausgerichteten Fasern der Reibkörper (9) mehr als 75% beträgt.

12. Reibeinheit nach Anspruch 11, dadurch gekennzeichnet, daß der Anteil der ausgerichteten Fasern der Reibkörper (9) mehr als 90% beträgt.

13. Reibeinheit nach Anspruch 9 und Anspruch 12, dadurch gekennzeichnet, daß nahezu die gesamten Fasern der Reibkörper parallel zueinander und in Richtung der Flächennormalen der Reibfläche (8) verlaufen.

14. Reibeinheit nach Anspruch 1, dadurch gekennzeichnet, daß der Verbundwerkstoff der Halterungsteilkörper (7) eine Matrix aus Keramik und/oder Kohlenstoff aufweist.

15. Reibeinheit nach Anspruch 14, dadurch gekennzeichnet, daß die Matrix Metall in Form von Metalleinlagen enthält.

16. Reibeinheit nach Anspruch 1, dadurch gekennzeichnet, daß der Gehalt an Fasern in den Halterungsteilkörpern (7) mindestens 50 Vol.-% beträgt.

17. Reibeinheit nach Anspruch 1, dadurch gekennzeichnet, daß sich die Reibkörper (9) von der Trennfläche (11) der mindestens zwei Halterungsteilkörper (7) zu ihrer Reibfläche (8) hin verjüngen.

18. Reibeinheit nach Anspruch 17, dadurch gekennzeichnet, daß der sich verjüngende Teil der Reibkörper (9) konisch ausgebildet ist.

19. Reibeinheit nach Anspruch 17, dadurch gekennzeichnet, daß im Bereich der Verjüngung eine Anschlagfläche (12) gebildet ist.

20. Reibeinheit nach einem der Ansprüche 1 bis 19, dadurch gekennzeichnet, daß die Reibkörper (9) einen kreisförmigen Querschnitt aufweisen.

21. Reibeinheit nach Anspruch 1, dadurch gekennzeichnet, daß mindestens ein Teil der Ausnehmungen (19) in radialer Richtung der Scheibe gesehen einseitig offen ausgebildet ist.

22. Reibeinheit nach Anspruch 17, dadurch gekennzeichnet, daß der Halterungskörper (6) aus mindestens drei Halterungsteilkörpern (7) aufgebaut ist, wobei der dickere Bereich der Reibkörper (9) in dem mittleren Halterungsteilkörper angeordnet ist.

23. Reibeinheit nach Anspruch 1, dadurch gekennzeichnet, daß die Reibkörper an ihrem die Reibfläche (8) bildenden Ende jeweils einen flanschartigen Abschnitt aufweisen, der sich an die Außenoberfläche (10) des Halterungsteilkörpers (7) anlegt.

24. Reibeinheit nach Anspruch 1, dadurch gekennzeichnet, daß die Reibkörper (9) als Hohlkörper ausgebildet sind.

25. Reibeinheit nach Anspruch 4, dadurch gekennzeichnet, daß sie weiterhin eine Anzahl Reibkörper (9) aufweist, die im wesentlichen aus mit Kohlenstoff-Fasern verstärktem Siliziumkarbid gebildet sind.

26. Reibeinheit nach einem der Ansprüche 1 bis 25, dadurch gekennzeichnet, daß die Reibkörper (9) auf ihrer der Reibfläche (8) abgewandten Seite als Halteelemente zum Befestigen der Reibeinheit ausgebildet sind.

## Claims

1. A solid-construction friction unit, especially a brake disk, comprising a plurality of friction bodies (9) for frictional engagement with a counter-body, said friction bodies being arranged in spaced-apart relationship with one another in a holding body (6) consisting of at least two superimposed and interconnected partial holding bodies (7), with channel-like recesses (5; 19) being provided through which the friction bodies (9) are extending, and at least one end portion of the friction bodies (9) projecting beyond an outer surface (10) of the holding body (6) and comprising a face forming a friction surface (8), and each of the friction bodies (9), when viewed in their longitudinal extension in a direction perpendicular to the friction surface (8), having different cross-sectional widths, characterized in that said partial holding bodies (7) are made from a composite material which is reinforced with carbon and/or ceramic fibers, at least 50% of the fibers in their longitudinal extension being substantially in parallel with the friction surface (8), that the friction bodies (9) are made from carbon and/or a material containing silicon carbide, and that the partial holding bodies (7) are fixedly connected to each other and to the friction bodies (9) by means of a high temperature-resistant layer.

2. The friction unit according to claim 1, characterized in that the friction bodies (9) are reinforced by means of carbon and/or ceramic fibers.

3. The friction unit according to claim 1, characterized in that the friction bodies (9) are made from a material which apart from silicon carbide contains carbon and free silicon.

4. The friction unit according to claim 1, characterized in that a part of the friction bodies (9) is substantially made from carbon and a part of the friction bodies substantially from silicon carbide.

5. The friction unit according to claim, characterized in that the silicon carbide-containing friction bodies (9) contain free silicon.

6. The friction unit according to claim 1, characterized in that the high temperature-resistant layer contains at least 30% by vol. of silicon carbide.

7. The friction unit according to claim 2, characterized in that at least 50% of the fibers of the friction bodies (9) in their longitudinal extension are oriented such that they enclose an angle of ≤ 45° with the normals to the friction surfaces (8).

8. The friction unit according to claim 7, characterized in that the enclosed angle is < 30°.

9. The friction unit according to claim 8, characterized in that the enclosed angle is < 10°.

10. The friction unit according to claim 9, characterized in that the fibers of the friction bodies (9) extend almost in parallel with the normal to the friction surface (8).

11. The friction unit according to any one of claims 7 to 10, characterized in that the proportion of the oriented fibers of the friction bodies (9) is more than 75%.

12. The friction unit according to claim 11, characterized in that the proportion of the oriented fibers of the friction bodies (9) is more than 90%.

13. The friction unit according to claim 9 and claim 12, characterized in that almost all of the fibers of the friction bodies extend in parallel with one another and in the direction of the normal to the friction surface (8).

14. The friction unit according to claim 1, characterized in that the composite material of the partial holding bodies (7) comprises a matrix of a ceramic material and/or carbon.

15. The friction unit according to claim 14, characterized in that the matrix contains metal in the form of metal inserts.

16. The friction unit according to claim 1, characterized in that the content of fibers in the partial holding bodies (7) is at least 50% by volume.

17. The friction unit according to claim 1, characterized in that the friction bodies (9) taper from the interface (11) of the at least two partial holding bodies (7) towards their friction surface (8).

18. The friction unit according to claim 17, characterized in that the tapering part of the friction bodies (9) is made conical.

19. The friction unit according to claim 17, characterized in that a stop surface (12) is formed in the area of the taper.

20. The friction unit according to any one of claims 1 to 19, characterized in that the friction bodies (9) have a circular cross-section.

21. The friction unit according to claim 1, characterized in that at least a part of the recesses (19) when viewed in the radial direction of the disk is made open at one side.

22. The friction unit according to claim 17, characterized in that the holding body (6) is composed of at least three partial holding bodies (7), the thicker portion of the friction bodies (9) being arranged in the central partial holding body.

23. The friction unit according to claim 1, characterized in that the friction bodies are provided at their end forming the friction surface (8) with a flange-like section which rests on the outer surface (10) of the partial holding body (7).

24. The friction unit according to claim 1, characterized in that the friction bodies (9) are designed as hollow bodies.

25. The friction unit according to claim 4, characterized in that it further comprises a number of friction bodies (9) substantially made from carbon fiberreinforced silicon carbide.

26. The friction unit according to any one of claims 1 to 25, characterized in that the friction bodies (9) are designed at their side facing away from the friction surface (8) as holding elements for fastening the friction unit.

## Revendications

1. Unité à friction à structure massive, en particulier disque de frein, comprenant plusieurs corps de friction (9) destinés à venir en engagement de friction avec un corps opposé et agencés à distance les uns des autres dans un corps de maintien (6) constitué par au moins deux corps de maintien partiels (7) agencés l'un au-dessus de l'autre et reliés l'un à l'autre, dans lequel sont prévus des évidements (5 ; 19) analogues à des canaux et à travers lesquels s'étendent les corps de friction (9), dans lequel au moins une zone terminale des corps de friction (9) dépasse au-delà d'une surface extérieure (10). du corps de maintien (6) et comporte une surface frontale qui forme une surface de friction (8), et dans lequel chaque corps de friction (9) comporte des largeurs de sections différentes dans son extension longitudinale, vue perpendiculairement à la surface de friction (8),
caractérisée en ce que les corps partiels de maintien (7) sont formés par un matériau composite renforcé avec des fibres de carbone et/ou de céramique, en ce que 50 % au moins des fibres s'étendent avec leur extension longitudinale sensiblement parallèle à la surface de friction (8), en ce que les corps de friction (9) sont formés en un matériau qui contient du carbone et/ou du carbure de silicium, et ce que les corps partiels de maintien (7) sont reliés fermement l'un à l'autre et aux corps de friction (9) au moyen d'une couche résistant à haute température.

2. Unité à friction selon la revendication 1, caractérisée en ce que les corps de friction (9) sont renforcés au moyen de fibres de carbone et/ou de céramique.

3. Unité à friction selon la revendication 1, caractérisée en ce que les corps de friction (9) sont réalisés en un matériau qui contient, en plus du carbure de silicium, également du carbone et du silicium libre.

4. Unité à friction selon la revendication 1, caractérisée en ce qu'une partie des corps de friction (9) sont réalisés sensiblement en carbone, et une partie des corps de friction sont réalisés sensiblement en carbure de silicium.

5. Unité à friction selon la revendication 1, caractérisée en ce que les corps de friction contenant du carbure de silicium contiennent du silicium libre (9).

6. Unité à friction selon la revendication 1, caractérisée en ce que la couche résistante à haute température contient au moins 30 % en volume de carbure de silicium.

7. Unité à friction selon la revendication 2, caractérisée en ce que 50 % au moins des fibres des corps de friction (9) sont orientées avec leur direction longitudinale de telle façon qu'elles forment un angle inférieur ou égal à 45° avec les perpendiculaires aux surfaces de friction (8).

8. Unité à friction selon la revendication 7, caractérisée en ce que l'angle formé est inférieur à 30°.

9. Unité à friction selon la revendication 8, caractérisée en ce que l'angle formé est inférieur à 10°.

10. Unité à friction selon la revendication 9, caractérisée en ce que les fibres des corps de friction (9) s'étendent pratiquement parallèlement aux perpendiculaires à la surface de friction (8).

11. Unité à friction selon l'une des revendications 7 à 10, caractérisée en ce que la proportion des fibres orientées des corps de friction (9) est supérieure à 75 %.

12. Unité à friction selon la revendication 11, caractérisée en ce que la proportion des fibres orientées des corps de friction (9) est supérieure à 90 %.

13. Unité à friction selon la revendication 9 et la revendication 12, caractérisée en ce que pratiquement la totalité des fibres des corps de friction s'étendent parallèlement les unes aux autres et dans la direction des perpendiculaires à la surface de friction (8).

14. Unité à friction selon la revendication 1, caractérisée en ce que le matériau composite des corps partiels de maintien (7) comprend une matrice en céramique et/ou en carbone.

15. Unité à friction selon la revendication 14, caractérisée en ce que la matrice contient du métal sous forme d'inserts métalliques.

16. Unité à friction selon la revendication 1, caractérisée en ce que la teneur en fibres dans les corps partiels de maintien (7) s'élève à au moins 50 % en volume.

17. Unité à friction selon la revendication 1, caractérisée en ce que les corps de friction (9) vont en se rétrécissant depuis la surface de séparation (11) des deux corps partiels de maintien (7) en direction de leurs surfaces de friction (8).

18. Unité à friction selon la revendication 17, caractérisée en ce que la partie des corps de friction (9) qui va se rétrécissant est réalisée sous forme conique.

19. Unité à friction selon la revendication 17, caractérisée en ce qu'une surface de butée (12) est formée dans la région du rétrécissement.

20. Unité à friction selon l'une des revendications 1 à 19, caractérisée en ce que les corps de friction (9) ont une section transversale de forme circulaire.

21. Unité à friction selon la revendication 1, caractérisée en ce qu'une partie au moins des évidements (19) sont réalisés de façon ouverte sur un côté, vu en direction radiale du disque.

22. Unité à friction selon la revendication 17, caractérisée en ce que le corps de maintien (6) est constitué par au moins trois corps partiels de maintien (7), et en ce que la zone plus épaisse des corps de friction (9) est agencée dans le corps partiel de maintien central.

23. Unité à friction selon la revendication 1, caractérisée en ce que les corps de friction comprennent, sur leurs extrémités qui forment la surface de friction (8), un tronçon respectif en forme de bride, qui s'applique contre la surface extérieure (10) du corps partiel de maintien (7).

24. Unité à friction selon la revendication 1, caractérisée en ce que les corps de friction (9) sont réalisés sous forme de corps creux.

25. Unité à friction selon la revendication 4, caractérisée en ce qu'elle comporte en outre un nombre de corps de friction (9) qui sont réalisés essentiellement en carbure de silicium renforcé par des fibres de carbone.

26. Unité à friction selon l'une des revendications 1 à 25, caractérisée en ce que les corps de friction (9) sont réalisés sous la forme d'éléments de maintien afin de fixer l'unité à friction, sur leur côté détourné de la surface de friction (8).
